# EUROPEAN PATENT SPECIFICATION

(11) **EP 2 406 622 B1**
(45) Date of publication and mention of the grant of the patent: **16.01.2013**
(21) Application number: 10714683.9
(22) Date of filing: 09.03.2010
(51) Int. Cl.: G01N 27/406

(54) **OXYGEN SENSOR CONTROLLER AND OXYGEN SENSOR CONTROL METHOD**
STEUERUNG FÜR EINEN SAUERSTOFFSENSOR UND VERFAHREN ZUR STEUERUNG EINES SAUERSTOFFSENSORS
DISPOSITIF DE COMMANDE DE CAPTEUR D'OXYGÈNE ET PROCÉDÉ DE COMMANDE DE CAPTEUR D'OXYGÈNE

(30) Priority: 12.03.2009 JP 2009059483
(43) Date of publication of application: 18.01.2012
(73) Proprietor: Toyota Jidosha Kabushiki Kaisha, Toyota-shi, Aichi-ken 471-8571 (JP)
(72) Inventor: MASUI, Takatoshi, Aichi-ken 471-8571 (JP)
(74) Representative: Albutt, Anthony John
(86) International application number: PCT/IB2010/000767
(87) International publication number: WO 2010/103401

(56) References cited:
- EP-A1- 0 743 516
- JP-A- 5 172 329
- JP-A- 2007 258 039
- US-A1- 2004 025 856
- US-A1- 2007 065 711

## Description

### BACKGROUND OF THE INVENTION

### 1. Field of the Invention

The invention relates to an oxygen sensor controller and an oxygen sensor control method.

### 2. Description of the Related Art

An oxygen sensor detects the concentration of oxygen in an atmosphere. When the oxygen sensor has an abnormality, it is difficult to accurately detect the concentration of oxygen. Then, there is disclosed a technique for correcting the output value of an oxygen sensor on the basis of a sensor output when the oxygen sensor is exposed to air (for example, see Japanese Patent Application Publication No. 5-172329 (JP-A-5-172329)).

The oxygen sensor has a high response and a wide oxygen concentration detection range in a high-temperature range. Thus, it is desirable to use the oxygen sensor in a high-temperature range. However, when the oxygen sensor is maintained at a high temperature, degradation may occur. When an oxygen sensor is used as an A/F sensor of an automobile, or the like, and if the service life of a stationary fuel cell is assumed to be ten years, and the usage pattern of the automobile, that is, the fact that the automobile is rarely continuously used for 24 hours, is considered, the service life required of the oxygen sensor is presumed to be a fraction of the service life of the stationary fuel cell or below. In this case, even when the oxygen sensor is maintained at a high temperature, degradation of the oxygen sensor is not a big problem.

However, when the oxygen sensor is used for a stationary fuel cell (for example, see JP 2007 258039) that is required for the service life of about one hundred thousand hours, degradation of the oxygen sensor due to a high temperature becomes a big problem. Then, it is conceivable that the temperature of the oxygen sensor is maintained at a low temperature when the oxygen sensor is used. However, the oxygen sensor has a low response and a narrow oxygen concentration detection range in a low temperature range. Thus, in a low temperature range, when the output of the oxygen sensor is calibrated, calibration accuracy decreases.

### SUMMARY OF THE INVENTION

The invention provides an oxygen sensor controller and oxygen sensor control method that are able to calibrate an output of an oxygen sensor with high accuracy while suppressing degradation of the oxygen sensor.

A first aspect of the invention relates to an oxygen sensor controller. The oxygen sensor controller includes: an oxygen sensor that detects a concentration of oxygen in exhaust gas from a combustion chamber in which anode off-gas of a fuel cell is burned; a temperature control unit that adjusts a temperature of the oxygen sensor to a target temperature; and a calibration unit that calibrates an output of the oxygen sensor. The temperature control unit has a plurality of the target temperatures, selects a calibration target temperature that is higher than or equal to a first predetermined temperature from among the plurality of target temperatures when the calibration unit calibrates the output of the oxygen sensor, and selects a target temperature, which is lower than the calibration target temperature, from among the plurality of target temperatures during power generation of the fuel cell. In the oxygen sensor controller, the target temperature of the oxygen sensor during normal power generation is low, so degradation of the oxygen sensor is suppressed. In addition, the target temperature of the oxygen sensor is high when the calibration unit calibrates the output of the oxygen sensor, so it is possible to calibrate the output of the oxygen sensor with high accuracy. From the above, it is possible to calibrate the output of the oxygen sensor with high accuracy while suppressing degradation of the oxygen sensor.

In the oxygen sensor controller, the calibration unit may calibrate the output of the oxygen sensor on the basis of an output of the oxygen sensor exposed to air. The oxygen sensor controller may further include: an air supply unit that supplies air to the combustion chamber; and a scavenging control unit that executes control such that the air supply unit supplies air to the combustion chamber when the output of the oxygen sensor is calibrated. The calibration unit may acquire a concentration of oxygen in air, detected by the oxygen sensor, and a temperature of the oxygen sensor, and the temperature control unit may set the first predetermined temperature to a minimum temperature, at or above which the oxygen sensor is able to detect the concentration of oxygen in air, on the basis of the relationship between the concentration of oxygen in air and the temperature of the oxygen sensor, which are acquired by the calibration unit. In this case, the target temperature of the oxygen sensor may be set low. Thus, it is possible to suppress degradation of the oxygen sensor. In the oxygen sensor controller, the temperature control unit may set the calibration target temperature to the first predetermined temperature.

In the oxygen sensor controller, the temperature control unit may correct the target temperature during power generation of the fuel cell on the basis of the updated calibration target temperature. In this case, it is possible to update the target temperature on the basis of the state of degradation of the oxygen sensor.

The oxygen sensor controller may further include an alarm unit that alarms a user when the calibration target temperature updated by the temperature control unit is higher than or equal to a second predetermined temperature that is higher than the first predetermined temperature. The oxygen sensor controller may further include a warm-up determination unit that determines whether warm-up of the oxygen sensor is complete, wherein the first predetermined temperature may be a warm-up completion temperature at which the warm-up determination unit determines that warm-up of the oxygen sensor is complete. In the oxygen sensor controller, the warm-up determination unit may determine that warm-up of the oxygen sensor is complete when an increase or a decrease in output of the oxygen sensor converges to within a predetermined range. In the oxygen sensor controller, the calibration unit may calibrate the output of the oxygen sensor when the combustion chamber is scavenged at the time of start-up of the fuel cell. In the oxygen sensor controller, the calibration unit may calibrate the output of the oxygen sensor when the combustion chamber is scavenged at the time of stop of operation of the fuel cell. In the oxygen sensor controller, the calibration unit may calibrate the output of the oxygen sensor when a load on the fuel cell is lower than or equal to a predetermined value. In the oxygen sensor controller, the calibration unit may stop operation of the fuel cell and calibrate the output of the oxygen sensor when a predetermined period of time has elapsed from a previous calibration of the output of the oxygen sensor.

A second aspect of the invention relates to an oxygen sensor control method. The oxygen sensor control method includes: adjusting a temperature of an oxygen sensor, which detects a concentration of oxygen in exhaust gas from a combustion chamber in which anode off-gas of a fuel cell is burned, to a target temperature; and calibrating an output of the oxygen sensor, wherein, when the temperature of the oxygen sensor is adjusted to the target temperature, a plurality of the target temperatures are set, a calibration target temperature higher than or equal to a first predetermined temperature is selected from among the plurality of target temperatures when the output of the oxygen sensor is calibrated, and a target temperature, which is lower than the calibration target temperature, is selected from among the plurality of target temperatures during power generation of the fuel cell. In the oxygen sensor control method, the target temperature of the oxygen sensor during normal power generation is low, so degradation of the oxygen sensor is suppressed. In addition, the target temperature of the oxygen sensor is high when the output of the oxygen sensor is calibrated, so it is possible to calibrate the output of the oxygen sensor with high accuracy. From the above, it is possible to calibrate the output of the oxygen sensor with high accuracy while suppressing degradation of the oxygen sensor.

In the oxygen sensor control method, the output of the oxygen sensor may be calibrated on the basis of an output of the oxygen sensor exposed to air. The oxygen sensor control method may further include: acquiring a concentration of oxygen in air, detected by the oxygen sensor, and a temperature of the oxygen sensor; and setting the first predetermined temperature to a minimum temperature, at or above which the oxygen sensor is able to detect the concentration of oxygen in air, on the basis of the relationship between the acquired concentration of oxygen in air and the acquired temperature of the oxygen sensor. In this case, the target temperature of the oxygen sensor may be set low. Thus, it is possible to suppress degradation of the oxygen sensor. In the oxygen sensor control method, the temperature control unit may set the calibration target temperature to the first predetermined temperature.

The oxygen sensor control method may further include correcting the target temperature during power generation of the fuel cell on the basis of the updated calibration target temperature. In this case, it is possible to update the target temperature on the basis of the state of degradation of the oxygen sensor.

The oxygen sensor control method may further include alarming a user when the updated calibration target temperature is higher than or equal to a second predetermined temperature that is higher than the first predetermined temperature. In the oxygen sensor control method, the output of the oxygen sensor may be calibrated when the combustion chamber is scavenged at the time of start-up of the fuel cell. In the oxygen sensor control method, the output of the oxygen sensor may be calibrated when the combustion chamber is scavenged at the time of stop of operation of the fuel cell. In the oxygen sensor control method, the output of the oxygen sensor may be calibrated when a load on the fuel cell is lower than or equal to a predetermined value. In the oxygen sensor control method, operation of the fuel cell may be stopped and the output of the oxygen sensor may be calibrated when a predetermined period of time has elapsed from a previous calibration of the output of the oxygen sensor.

The above aspects of the invention provide an oxygen sensor controller and oxygen sensor control method that are able to calibrate the output of an oxygen sensor with high accuracy while suppressing degradation of the oxygen sensor.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a schematic diagram that shows the overall configuration of a fuel cell system to which an oxygen sensor controller according to an embodiment of the invention is applied;
FIG. 2 is a schematic cross-sectional view for illustrating the details of an oxygen sensor according to the embodiment of the invention;
FIG. 3A is a graph for illustrating the characteristic of the oxygen sensor;
FIG. 3B is a graph for illustrating the characteristic of the oxygen sensor;
FIG. 4A is a view that shows an example of a flowchart executed at the time of start-up of the fuel cell system according to the embodiment of the invention;
FIG. 4B is a view that shows an example of a flowchart executed at the time of stop of the fuel cell system according to the embodiment of the invention;
FIG. 5 is a view that shows an example of a flowchart executed during power generation of a fuel cell according to the embodiment of the invention;
FIG. 6A is a flowchart that shows an example of a sensor calibration routine according to the embodiment of the invention; and
FIG. 6B is a graph for illustrating the characteristic of the oxygen sensor.

### DETAILED DESCRIPTION OF EMBODIMENTS

Hereinafter, an embodiment of the invention will be described.

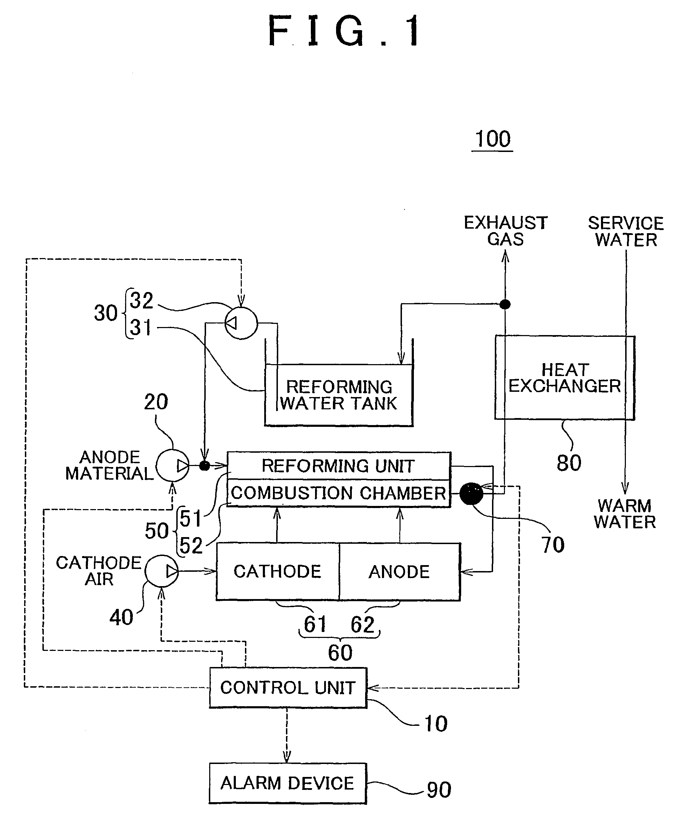

FIG. 1 is a schematic diagram that shows the overall configuration of a fuel cell system 100 to which an oxygen sensor controller according to the embodiment is applied. As shown in FIG 1, the fuel cell system 100 includes a control unit 10, an anode material supply unit 20, a reforming water supply unit 30, a cathode air supply unit 40, a reformer 50, a fuel cell 60, an oxygen sensor 70, a heat exchanger 80 and an alarm device 90.

The anode material supply unit 20 includes a fuel pump, or the like, for supplying fuel gas, such as hydrocarbons, to a reforming unit 51. The reforming water supply unit 30 includes a reforming water tank 31, a reforming water pump 32, and the like. The reforming water tank 31 stores reforming water necessary for reforming reaction in the reforming unit 51. The reforming water pump 32 is used to supply the reforming unit 51 with reforming water stored in the reforming water tank 31. The cathode air supply unit 40 includes an air pump, and the like, for supplying oxidant gas, such as air, to a cathode 61.

The reformer 50 includes the reforming unit 51 and a combustion chamber 52. The fuel cell 60 has a structure such that an electrolyte is held between the cathode 61 and an anode 62. The alarm device 90 is used to alarm a user, or the like, of attention, warning, or the like. The control unit 10 is formed of a central processing unit (CPU), a read only memory (ROM), a random access memory (RAM), and the like.

Next, the outline of the operation of the fuel cell system 100 will be described. The anode material supply unit 20 supplies the reforming unit 51 with a necessary amount of fuel gas in accordance with an instruction from the control unit 10. The reforming water pump 32 supplies the reforming unit 51 with a necessary amount of reforming water in accordance with an instruction of the control unit 10. The reforming unit 51 produces hydrogen from fuel gas and reforming water through reforming reaction using heat generated in the combustion chamber 52. The produced hydrogen is supplied to the anode 62.

The cathode air supply unit 40 supplies the cathode 61 with a necessary amount of cathode air in accordance with an instruction of the control unit 10. Through the above operations, electric power is generated in the fuel cell 60. Cathode off-gas discharged from the cathode 61 and anode off-gas discharged from the anode 62 both flow into the combustion chamber 52. In the combustion chamber 52, anode off-gas bums with oxygen contained in cathode off-gas. Heat obtained through combustion is transferred to the reforming unit 51.

In this way, in the fuel cell system 100, hydrogen, carbon monoxide, and the like, contained in the anode off-gas may be burned in the combustion chamber 52. The oxygen sensor 70 detects the concentration of oxygen contained in exhaust gas discharged from the combustion chamber 52, and transmits the detected result to the control unit 10. The control unit 10 is able to acquire the degree of burning of inflammable, such as hydrogen, carbon monoxide, and the like, contained in anode off-gas on the basis of the result detected by the oxygen sensor 70.

The heat exchanger 80 exchanges heat between service water and exhaust gas discharged from the combustion chamber 52. Condensed water obtained from exhaust gas through heat exchange is stored in the reforming water tank 31. When the target temperature of the oxygen sensor 70 is higher than or equal to a predetermined value, the alarm device 90 alarms a user, or the like, of attention, warning, or the like, that prompts checking of the fuel cell system 100, replacement of the oxygen sensor 70, or the like.

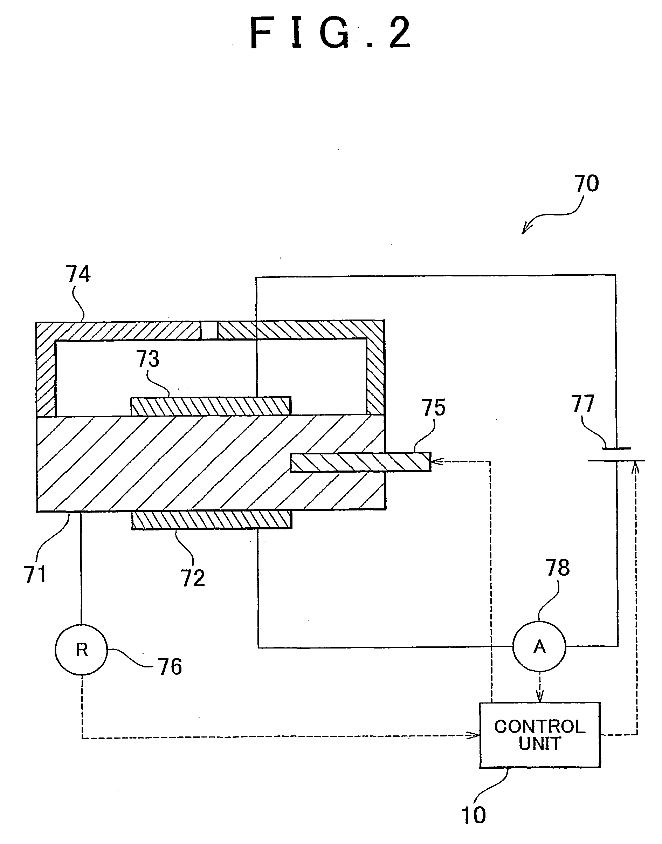

FIG. 2 is a schematic cross-sectional view for illustrating the details of the oxygen sensor 70. As shown in FIG. 2, the oxygen sensor 70 is a limiting current oxygen sensor. The oxygen sensor 70 has a structure such that the anode 72 is provided on one surface of the electrolyte 71, the cathode 73 is provided on the other surface of the electrolyte 71 and a porous substrate 74 having pores is arranged to cover the cathode 73. A heater 75 is arranged in the electrolyte 71. In addition, a resistance sensor 76 is connected to the electrolyte 71.

The electrolyte 71 is formed of an oxygen ion conducting electrolyte, such as zirconia. The anode 72 and the cathode 73 are, for example, made of platinum. The anode 72 and the cathode 73 form an external circuit via wiring. The external circuit includes a power supply 77 and an ammeter 78. The porous substrate 74 is, for example, made of porous alumina. The heater 75 is, for example, formed of a platinum thin film, or the like. The resistance sensor 76 detects the impedance of the electrolyte 71 to thereby detect the resistance of the electrolyte 71.

Next, control executed by the control unit 10 over the oxygen sensor 70 will be described. The control unit 10 supplies electric power to the heater 75 to heat the electrolyte 71. In the meantime, the control unit 10 acquires the resistance of the electrolyte 71 on the basis of the result detected by the resistance sensor 76. The resistance of the electrolyte 71 has a correlation to the temperature of the electrolyte 71. The control unit 10 acquires the temperature of the electrolyte 71 on the basis of the correlation. For example, the control unit 10 adjusts the temperature of the electrolyte 71 to a target temperature through feedback control. Note that, in the following description, the "temperature of the oxygen sensor 70" is synonymous with the temperature of the electrolyte 71.

After the temperature of the electrolyte 71 has reached a predetermined value, the control unit 10 controls the power supply 77 so that a positive voltage is applied to the anode 72. As the positive voltage is applied to the anode 72 by the power supply 77, oxygen becomes oxygen ions in the cathode 73, and the oxygen ions conduct through the electrolyte 71 in accordance with the following formula (1). In the anode 72, oxygen ions become oxygen molecules in accordance with the following formula (2).

O₂ + 4e⁻ = 2O²⁻ (1)

2O²⁻ = O₂ + 4e⁻ (2)

The amount of oxygen transport to the cathode 73 is controlled by the pore of the porous substrate 74, so electric current (that is, limiting current) generated by the reaction of formula (1) and formula (2) is determined on the basis of the amount of diffusion of oxygen gas in the pore of the porous substrate 74. The amount of diffusion of oxygen gas is determined on the basis of the concentration of oxygen outside the porous substrate 74.

The control unit 10 acquires the output current of the oxygen sensor 70 based on the value detected by the ammeter 78. The output current of the oxygen sensor 70 is proportional to the concentration of oxygen. The control unit 10 detects the concentration of oxygen of an atmosphere, to which the oxygen sensor 70 is exposed, on the basis of the proportionality. Note that the control unit 10 may detect the concentration of oxygen in an atmosphere, to which the oxygen sensor 70 is exposed, on the basis of the voltage obtained by amplifying and converting electric current detected by the ammeter 78.

In addition, the control unit 10 calibrates the output of the oxygen sensor 70 at the time of start-up of the fuel cell system 100, at the time of stop of the fuel cell system 100 and during power generation of the fuel cell system 100 to calculate a calibration factor J, which will be described later. The details of calibration of the output of the oxygen sensor 70 will be described later.

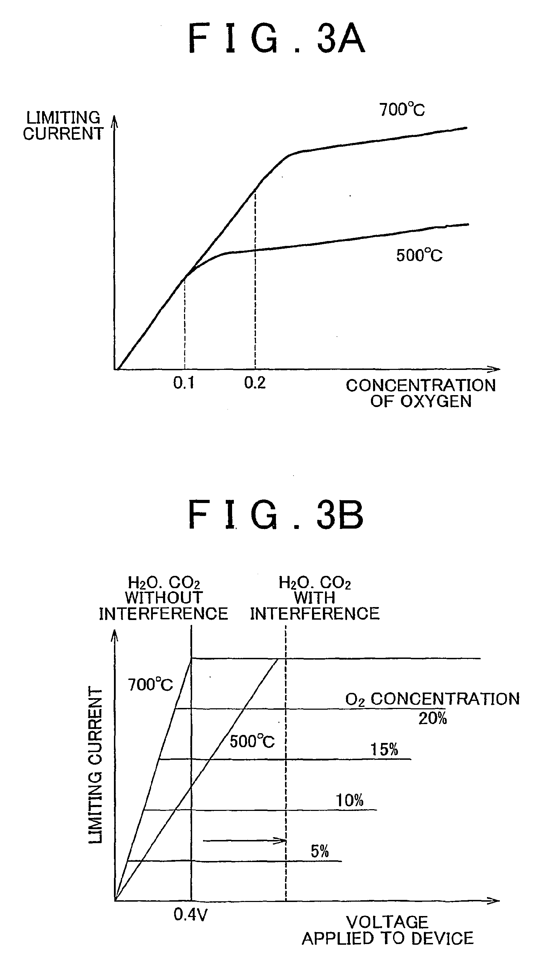

Next, the characteristic of the oxygen sensor 70 will be described. FIG. 3A is a graph that shows the relationship between the concentration of oxygen in an atmosphere to which the oxygen sensor 70 is exposed and the limiting current of the oxygen sensor 70. The concentration of oxygen in FIG. 3A is indicated using a numerical value when 1 is defined as 100%. FIG. 3B is a graph that shows the relationship between the voltage applied to the electrolyte 71 of the oxygen sensor 70 and the limiting current.

As shown in FIG. 3A, the limiting current increases in proportion to an increase in the concentration of oxygen. Thus, the concentration of oxygen may be detected by detecting the limiting current. However, as the concentration of oxygen is equal to or higher than a predetermined value, the rate of increase in limiting current decreases. Thus, the concentration of oxygen detected by the oxygen sensor 70 has an upper limit. The upper limit is higher as the temperature increases.

As shown in FIG. 3B, the limiting current increases with an increase in voltage applied to the electrolyte 71. However, as the temperature of the oxygen sensor 70 decreases, the rate of increase in limiting current decreases against the applied voltage. In FIG. 3B, when the temperature of the oxygen sensor 70 is high (for example, about 700°C), the concentration of oxygen in air may be detected even when the applied voltage is about 0.4 V. On the other hand, when the temperature of the oxygen sensor 70 is low (for example, 500°C), the concentration of oxygen that may be detected is about 10% when the applied voltage is about 0.4 V. Then, in order to extend the oxygen concentration detection range, it is conceivable that the voltage applied to the electrolyte 71 is increased. In this case, the concentration of oxygen in air may be detected even when the temperature of the oxygen sensor 70 is about 500°C. However, when the applied voltage is increased, interference between water vapor (H₂O) and carbon dioxide (CO₂) occurs, so it is difficult to assure the accuracy of the oxygen sensor 70.

In consideration of the characteristics shown in FIG. 3A and FIG. 3B, in order to detect the concentration of oxygen over a wide range, the temperature of the oxygen sensor 70 is desirably higher (for example, about 700°C). Furthermore, in a high-temperature range, a period of time taken for the amount of passage of oxygen ions that pass through the electrolyte 71 to reach a predetermined amount is reduced. Thus, in view of the response of the oxygen sensor 70 as well, the temperature of the oxygen sensor 70 is desirably higher. From the above, the oxygen sensor, such as an A/F sensor of an automobile, required for a wide oxygen concentration detection range and a high response is used in a high-temperature range.

On the other hand, in the fuel cell system, almost all the inflammable component in exhaust gas is hydrogen. In this case, limit of inflammability of exhaust gas extends. In addition, in the fuel cell system 100, heat of combustion of anode off-gas is absorbed by the reforming unit 51, so a combustion flame temperature in the combustion chamber 52 is relatively low. By so doing, the amount of NOx emission reduces. As a result, in the fuel cell system, it is only necessary to detect whether carbon monoxide is present in exhaust gas. Note that, when oxygen remaining in exhaust gas is detected, it is possible to detect the absence of carbon monoxide. From the above, in the fuel cell system, the response and oxygen concentration detecting upper limit required of the oxygen sensor may be low.

In the present embodiment, the control unit 10 sets the target temperature of the oxygen sensor 70 low (for example, 500°C) during power generation of the fuel cell 60. In this case, it is possible to sufficiently obtain the concentration of oxygen necessary for detection in the fuel cell system 100. In addition, because it is not necessary to maintain the oxygen sensor 70 at a high temperature, it is possible to suppress degradation of the oxygen sensor 70, particularly, degradation of the electrolyte 71. Thus, when the service life required of the oxygen sensor is long as in the case of the fuel cell system, it is also possible to suppress degradation of the oxygen sensor. Furthermore, it is possible to reduce power consumption of the oxygen sensor 70. Thus, the efficiency of the fuel cell system 100 improves.

On the other hand, when the output of the oxygen sensor 70 is calibrated, the oxygen sensor 70 desirably has a high response and a wide oxygen concentration detection range. Then, in the present embodiment, when the control unit 10 calibrates the output of the oxygen sensor 70, the control unit 10 sets the target temperature of the oxygen sensor 70 high (for example, 700°C). In this case, it is possible to calibrate the output of the oxygen sensor 70 with high accuracy. Note that the calibration of the output ends in a short period of time, so degradation of the oxygen sensor 70 is suppressed even when the temperature of the oxygen sensor 70 increases.

As described above, the control unit 10 has a plurality of target temperatures, selects a low temperature from among the plurality of target temperatures during power generation of the fuel cell 60, and selects a high temperature from among the plurality of target temperatures when the output of the oxygen sensor 70 is calibrated. Thus, it is possible to calibrate the output of the oxygen sensor with high accuracy while suppressing degradation of the oxygen sensor.

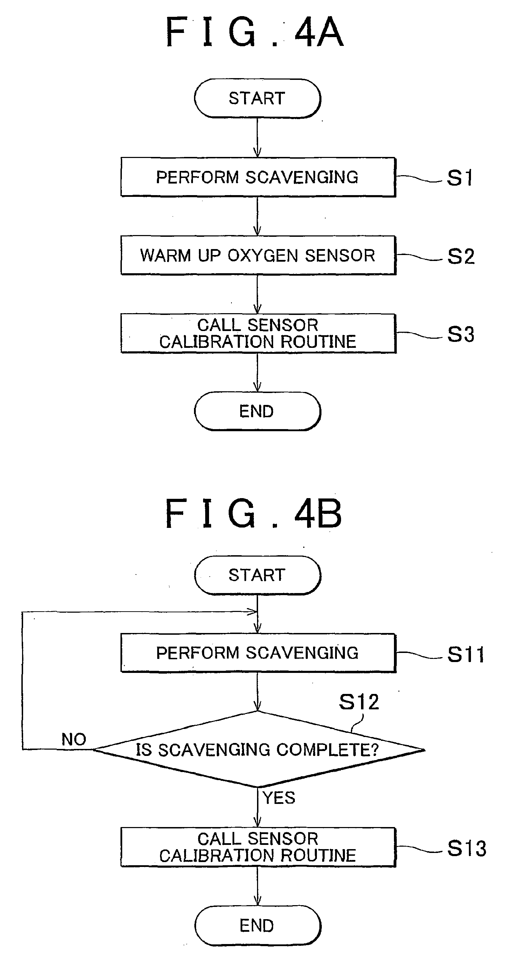

Next, the details of the calibration of the output of the oxygen sensor 70 will be described with reference to FIG. 4A to FIG. 6. FIG. 4A is a view that shows an example of a flowchart executed at the time of start-up of the fuel cell system 100. As shown in FIG. 4A, when the start-up switch of the fuel cell system 100 is turned on, the control unit 10 controls the cathode air supply unit 40 so that the cathode 61 is supplied with air (step S1). In this case, air is used as scavenging gas to scavenge the cathode 61 and the combustion chamber 52.

Subsequently, the control unit 10 supplies electric power to the heater 75 to warm up the oxygen sensor 70 (step S2). Then, the control unit 10 calls a sensor calibration routine (step S3). After that, the control unit 10 ends the process of the flowchart. With the flowchart shown in FIG. 4A, it is possible to calibrate the output of the oxygen sensor 70 in air at the time of start-up of the fuel cell system 100.

FIG. 4B is a view that shows an example of a flowchart executed at the time of stop of the fuel cell system 100. As shown in FIG. 4B, when the stop switch of the fuel cell system 100 is turned on, the control unit 10 controls the cathode air supply unit 40 so that the cathode 61 is supplied with air (step S11). In this case, the cathode 61 and the combustion chamber 52 are scavenged.

Subsequently, the control unit 10 determines whether scavenging is complete (step S12). For example, when the accumulated air flow rate has reached a predetermined amount, the control unit 10 determines that scavenging is complete. When it is determined in step S12 that scavenging is not complete, the control unit 10 executes step S11 again. When it is determined in step S12 that scavenging is complete, the control unit 10 calls the sensor calibration routine (step S13). After that, the control unit 10 ends the process of the flowchart. With the flowchart shown in FIG. 4B, it is possible to calibrate the output of the oxygen sensor 70 in air at the time of stop of the fuel cell system 100.

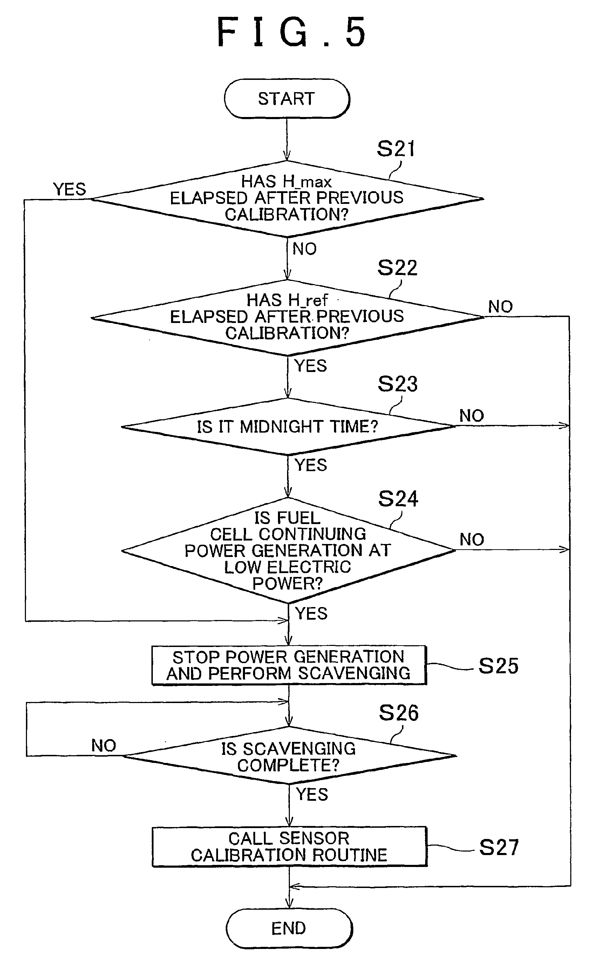

FIG. 5 is a view that shows an example of a flowchart executed during power generation of the fuel cell 60. The flowchart shown in FIG. 5 is, for example, executed at an interval of 60 seconds during power generation of the fuel cell 60. As shown in FIG. 5, the control unit 10 determines whether a predetermined period of time H_max has elapsed after the previous calibration of the output of the oxygen sensor 70 (step S21). The period of time H_max may be, for example, set at 672 hours (four weeks).

When it is determined in step S21 that the period of time H_max has not elapsed, the control unit 10 determines whether a predetermined period of time H_ref (< H_max) has elapsed after the previous calibration of the output of the oxygen sensor 70 (step S22). The period of time H_ref may be, for example, set at 168 hours (one week). When it is determined in step S22 that the period of time H_ref has elapsed, the control unit 10 determines whether the current time is a midnight (step S23). For example, A.M. one o'clock to A.M. three o'clock may be set as a midnight time.

When it is determined in step S23 that the current time is a midnight, the control unit 10 determines whether the fuel cell 60 is continuing power generation at a low electric power (step S24). For example, when power generation is being continued for a predetermined period of time (about ten minutes) at a low electric power (below 250 W), the control unit 10 may determine that the fuel cell 60 is continuing power generation at a low electric power.

When it is determined in step S24 that the fuel cell 60 is continuing power generation at a low electric power, the control unit 10 controls a switch, or the like, so that the load circuit of the fuel cell 60 is released, controls the anode material supply unit 20 so as to stop supply of anode material, and controls the cathode air supply unit 40 so as to supply air to the cathode 61 (step S25). By so doing, power generation of the fuel cell 60 is stopped, and scavenging is performed.

After that, the control unit 10 determines whether scavenging is complete (step S26). For example, when the accumulated air flow rate has reached a predetermined amount, the control unit 10 determines that scavenging is complete. When it is determined that scavenging is not complete in step S26, the control unit 10 executes step S26 again. When it is determined in step S26 that scavenging is complete, the control unit 10 calls the sensor calibration routine (step S27). After that, the control unit 10 ends the process of the flowchart.

When it is determined in step S21 that the period of time H_max has elapsed, the control unit 10 executes step S25. Thus, irrespective of a midnight time or power generation at a low electric power, the sensor calibration routine is called after a lapse of the period of time H_max. When it is determined in step S22 that the period of time H_ref has not elapsed, when it is determined in step S23 that the current time is not a midnight, or when it is determined in step S24 that the fuel cell 60 is not continuing power generation at a low electric power, the control unit 10 ends the process of the flowchart.

With the flowchart shown in FIG. 5, even during power generation of the fuel cell 60, but when the period of time H_ref has elapsed after the previous calibration of the output of the oxygen sensor 70, it is possible to calibrate the output of the oxygen sensor 70 in air when the influence on supply of electric power is small, such as at a midnight time or during power generation at a low electric power, that is, when the load on the fuel cell is lower than or equal to a predetermined value.

Note that a gas meter of town gas, or the like, has the function of detecting a gas leakage when gas continuously flows for a predetermined period of time or longer. Thus, when town gas is used as anode material, it is necessary to stop supply of anode material before the predetermined period of time elapses. With the flowchart shown in FIG. 5, power generation is stopped when the period of time H_max has elapsed even not during power generation at a low electric power, so it is possible to avoid gas leakage detection. In addition, it is possible to calibrate the output of the oxygen sensor 70 at the same timing.

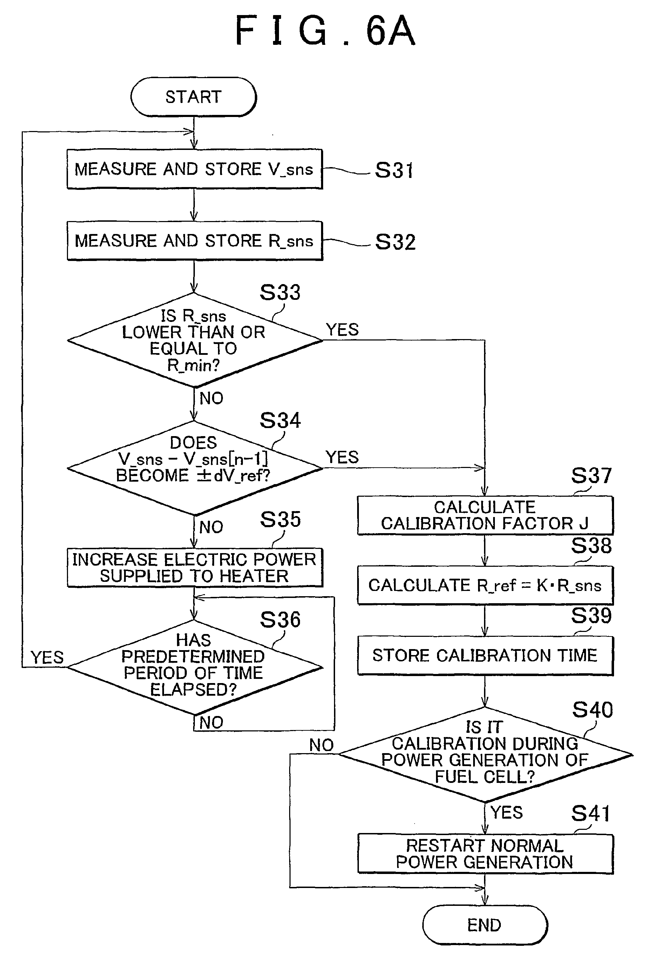

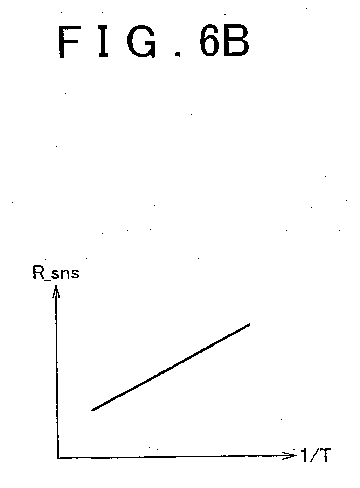

FIG. 6A is a flowchart that shows an example of the sensor calibration routine. As shown in FIG. 6A, the control unit 10 measures and stores the output V_sns of the oxygen sensor 70 (step S31). In this case, the control unit 10 amplifies and converts electric current detected by the ammeter 78, and acquires the resultant voltage as the output V_sns. Thus, the output V_sns is a parameter related to the concentration of oxygen in air. Subsequently, the control unit 10 measures the resistance R_sns of the electrolyte 71 on the basis of the value detected by the resistance sensor 76, and stores the measured resistance R_sns (step S32). As shown in FIG. 6B, the resistance R_sns is proportional to the inverse of the temperature T of the electrolyte 71, so it is possible to acquire the temperature of the electrolyte 71 by acquiring the resistance R_sns.

Then, the control unit 10 determines whether the temperature of the oxygen sensor 70 has reached a predetermined maximum value (step S33). In this case, the control unit 10 determines whether the resistance R_sns is lower than or equal to a predetermined minimum value R_min of the electrolyte 71. For example, the minimum value R_min may be set at 25 Q. Note that the minimum value R_min may be determined as the resistance of the electrolyte 71, which corresponds to a minimum temperature, at or above which the concentration of oxygen in air is detectable, on the basis of the relationship between the obtained output of the oxygen sensor 70 and the obtained temperature of the oxygen sensor 70. The minimum temperature at or above which the concentration of oxygen in air is detectable is a minimum temperature at or above which the concentration of oxygen in air is detectable within the range in which the proportionality between the concentration of oxygen and the limiting current is maintained in the graph of FIG. 3A. In this case, it is possible to set the target temperature of the oxygen sensor 70 low, so it is possible to suppress degradation at the time of calibration of the output of the oxygen sensor 70. Note that the minimum value R_min may be updated where necessary.

When it is determined in step S33 that the resistance R_sns is not lower than or equal to the predetermined minimum value R_min of the electrolyte 71, the control unit 10 determines whether warm-up of the oxygen sensor 70 is complete (step S34). In this case, the control unit 10 determines whether an increase or decrease in output V_sns converges to a predetermined value to thereby determine whether warm-up of the oxygen sensor 70 is complete. Specifically, the control unit 10 determines whether a difference between the output V_sns and the output V_sns[n-1] at the time of the previous step S31 is ±dV_ref. The dV_ref is a reference value, and may be, for example, set at about 0.02 V.

When it is determined in step S34 that warm-up of the oxygen sensor 70 is not complete, the control unit 10 increases electric power supplied to the heater 75 (step S35). After that, the control unit 10 determines whether a predetermined period of time has elapsed (step S36). In this case, the predetermined period of time may be, for example, set at about three seconds. When it is determined in step S36 that the predetermined period of time has not elapsed, the control unit 10 executes step S36 again. When it is determined in step S36 that the predetermined period of time has elapsed, the control unit 10 executes step S31 again.

When it is determined in step S33 that the resistance R_sns is lower than or equal to the predetermined minimum value R_min of the electrolyte 71, or when it is determined in step S34 that warm-up of the oxygen sensor 70 is complete, the control unit 10 calculates the calibration factor J of the concentration of oxygen (step S37). In this case, the control unit 10 calculates the calibration factor J in accordance with the following formula (3). A reference voltage is the output V_sns when the concentration of oxygen is 0%. Thus, the concentration of oxygen detected by the oxygen sensor 70 is proportional to (V_sns - Reference Voltage). In addition, "0.21" indicates that the concentration of oxygen in air is 21%. Note that, thereafter, the oxygen sensor 70 outputs a value corrected by the calibration factor J.

J = (V_sns - Reference Voltage)/0.21 (3)

Subsequently, the control unit 10 calculates the target temperature (target resistance in this embodiment) R_ref of the oxygen sensor 70 during normal power generation in accordance with the following formula (4) (step S38). Note that "K" is a value larger than 1 and is, for example, about 1.2. In this case, the target temperature of the oxygen sensor 70 during normal power generation may be set lower than that at the time of calibration of the output of the oxygen sensor 70.

R_ref = K•R_sns (4)

Then, the control unit 10 stores the time at which the calibration factor J is calculated in step S37 (step S39). After that, the control unit 10 determines whether the sensor calibration routine is performed during power generation of the fuel cell 60 (step S40). In this case, the control unit 10 may determine that the sensor calibration routine is performed during power generation of the fuel cell 60 on the basis of the fact that the flowchart shown in FIG. 5 calls the sensor calibration routine. When it is determined in step S40 that the sensor calibration routine is performed during power generation of the fuel cell 60, the control unit 10 restarts power generation of the fuel cell 60 (step S41). When it is determined in step S40 that the sensor calibration routine is performed not during power generation of the fuel cell 60, or after execution of step S41, the control unit 10 ends the process of the flowchart.

With the flowchart shown in FIG. 6A, it is possible to calibrate the output of the oxygen sensor 70 when the oxygen sensor 70 has a high response and a wide oxygen concentration detection range. Thus, it is possible to calibrate the output of the oxygen sensor 70 with high accuracy. In addition, the target temperature of the oxygen sensor 70 during normal power generation of the fuel cell 60 may be set low. Thus, it is possible to improve durability while suppressing degradation of the oxygen sensor 70.

In the present embodiment, the control unit 10 corresponds to a temperature control unit and a calibration unit, the alarm device 90 corresponds to an alarm unit, and the control unit 10 and the oxygen sensor 70 correspond to an oxygen sensor controller.

## Claims

1. An oxygen sensor controller comprising:
an oxygen sensor (70) for detecting a concentration of oxygen in exhaust gas from a combustion chamber (52) in which anode off-gas of a fuel cell (60) is burned;
a temperature control unit (10) for adjusting a temperature of the oxygen sensor (70) to a target temperature; and **characterized by**
a calibration unit (10) for calibrating an output of the oxygen sensor (70), wherein
the temperature control unit (10) has a plurality of the target temperatures, is adopted to select a calibration target temperature that is higher than or equal to a first predetermined temperature from among the plurality of target temperatures when the calibration unit (10) calibrates the output of the oxygen sensor (70), and is adopted to select target temperature, which is lower than the calibration target temperature, from among the plurality of target temperatures during power generation of the fuel cell.

2. The oxygen sensor controller according to claim 1, wherein
the calibration unit (10) calibrates the output of the oxygen sensor (70) on the basis of an output of the oxygen sensor (70) exposed to air.

3. The oxygen sensor controller according to claim 1, further comprising:
an air supply unit (40) that supplies air to the combustion chamber (52); and
a scavenging control unit (10) that executes control such that the air supply unit (40) supplies air to the combustion chamber (52) when the output of the oxygen sensor (70) is calibrated.

4. The oxygen sensor controller according to any one of claims 1 to 3, wherein
the calibration unit (10) acquires a concentration of oxygen in air, detected by the oxygen sensor (70), and a temperature of the oxygen sensor (70), and
the temperature control unit(10) sets the first predetermined temperature to a minimum temperature, at or above which the oxygen sensor (70) is able to detect the concentration of oxygen in air, on the basis of the relationship between the concentration of oxygen in air and the temperature of the oxygen sensor (70), which are acquired by the calibration unit (10).

5. The oxygen sensor controller according to claim 4, wherein
the temperature control unit (10) sets the calibration target temperature to the first predetermined temperature.

6. The oxygen sensor controller according to claim 5, wherein
the temperature control unit (10) corrects the target temperature during power generation of the fuel cell (60) on the basis of the updated calibration target temperature.

7. The oxygen sensor controller according to claim 5 or 6, further comprising:
an alarm unit (90) that alarms a user when the calibration target temperature updated by the temperature control unit (10) is higher than or equal to a second predetermined temperature that is higher than the first predetermined temperature.

8. The oxygen sensor controller according to any one of claims 1 to 3, further comprising:
a warm-up determination unit (10) that determines whether warm-up of the oxygen sensor (70) is complete, wherein
the first predetermined temperature is a warm-up completion temperature at which the warm-up determination unit (10) determines that warm-up of the oxygen sensor (70) is complete.

9. The oxygen sensor controller according to claim 8, wherein
the warm-up determination unit (10) determines that warm-up of the oxygen sensor (70) is complete when an increase or a decrease in output of the oxygen sensor (70) converges to within a predetermined range.

10. The oxygen sensor controller according to any one of claims 1 to 9, wherein
the calibration unit (10) calibrates the output of the oxygen sensor (70) when the combustion chamber (52) is scavenged at the time of start-up of the fuel cell (60).

11. The oxygen sensor controller according to any one of claims 1 to 9, wherein
the calibration unit (10) calibrates the output of the oxygen sensor (70) when the combustion chamber (52) is scavenged at the time of stop of operation of the fuel cell (60).

12. The oxygen sensor controller according to any one of claims 1 to 9, wherein
the calibration unit (10) calibrates the output of the oxygen sensor (70) when a load on the fuel cell (60) is lower than or equal to a predetermined value.

13. The oxygen sensor controller according to any one of claims 1 to 9, wherein
the calibration unit (10) stops operation of the fuel cell and calibrates the output of the oxygen sensor (70) when a predetermined period of time has elapsed from a previous calibration of the output of the oxygen sensor (70).

14. An oxygen sensor control method **characterized by** comprising:
adjusting a temperature of an oxygen sensor (70), which detects a concentration of oxygen in exhaust gas from a combustion chamber (52) in which anode off-gas of a fuel cell (60) is burned, to a target temperature; and
calibrating an output of the oxygen sensor (70), wherein
when the temperature of the oxygen sensor (70) is adjusted to a target temperature, a plurality of the target temperatures are set, a calibration target temperature higher than or equal to a first predetermined temperature is selected from among the plurality of target temperatures when the output of the oxygen sensor (70) is calibrated, and a target temperature, which is lower than the calibration target temperature, is selected from among the plurality of target temperatures during power generation of the fuel cell (60).

15. The oxygen sensor control method according to claim 14, wherein
the output of the oxygen sensor (70) is calibrated on the basis of an output of the oxygen sensor (70) exposed to air.

16. The oxygen sensor control method according to claim 14 or 15, further comprising:
acquiring a concentration of oxygen in air, detected by the oxygen sensor (70), and a temperature of the oxygen sensor (70); and
setting the first predetermined temperature to a minimum temperature, at or above which the oxygen sensor (70) is able to detect the concentration of oxygen in air, on the basis of the relationship between the acquired concentration of oxygen in air and the acquired temperature of the oxygen sensor (70).

17. The oxygen sensor control method according to claim 16, further comprising:
setting the calibration target temperature to the first predetermined temperature.

18. The oxygen sensor control method according to claim 17, further comprising:
correcting the target temperature during power generation of the fuel cell (60) on the basis of the updated calibration target temperature.

19. The oxygen sensor control method according to claim 17 or 18, further comprising:
alarming a user when the updated calibration target temperature is higher than or equal to a second predetermined temperature that is higher than the first predetermined temperature.

20. The oxygen sensor control method according to any one of claims 14 to 19, wherein
the output of the oxygen sensor (70) is calibrated when the combustion chamber (52) is scavenged at the time of start-up of the fuel cell (60).

21. The oxygen sensor control method according to any one of claims 14 to 19, wherein
the output of the oxygen sensor (70) is calibrated when the combustion chamber (52) is scavenged at the time of stop of operation of the fuel cell (60).

22. The oxygen sensor control method according to any one of claims 14 to 19, wherein
the output of the oxygen sensor (70) is calibrated when a load on the fuel cell (60) is lower than or equal to a predetermined value.

23. The oxygen sensor control method according to any one of claims 14 to 19, wherein
operation of the fuel cell (60) is stopped and the output of the oxygen sensor (70) is calibrated when a predetermined period of time has elapsed from a previous calibration of the output of the oxygen sensor (70).

## Patentansprüche

1. Sauerstoffsensorsteuergerät, mit
einem Sauerstoffsensor (70) zur Erfassung einer Konzentration von Sauerstoff in Abgas aus einer Brennkammer (52), in der Anodenabgas einer Brennstoffzelle (60) verbrannt wird;
einer Temperatursteuereinheit (10) zur Angleichung einer Temperatur des Sauerstoffsensors (70) an eine Zieltemperatur; **gekennzeichnet durch**
eine Kalibriereinheit (10) zur Kalibrierung einer Ausgabe des Sauerstoffsensors (70), wobei
die Temperatursteuereinheit (10) eine Vielzahl der Zieltemperaturen aufweist, dazu eingerichtet ist, um eine Kalibrierzieltemperatur, die höher als oder gleich wie eine erste vorbestimmte Temperatur, unter der Vielzahl von Zieltemperaturen auszuwählen, wenn die Kalibriereinheit (10) die Ausgabe des Sauerstoffsensors (70) kalibriert, und dazu eingerichtet ist, um eine Zieltemperatur, die niedriger als die Kalibrierzieltemperatur ist, unter der Vielzahl von Zieltemperaturen während einer Energieerzeugung der Brennstoffzelle auszuwählen.

2. Sauerstoffsensorsteuergerät nach Anspruch 1, wobei
die Kalibriereinheit (10) die Ausgabe des Sauerstoffsensors (70) basierend auf einer Ausgabe des Luft ausgesetzten Sauerstoffsensors (70) kalibriert.

3. Sauerstoffsensorsteuergerät nach Anspruch 1, ferner mit:
einer Luftzufuhreinheit (40), die Luft zu der Brennkammer (52) zuführt; und
einer Reinigungssteuereinheit (10), die eine Steuerung derart ausführt, dass die Luftzufuhreinheit (40) Luft zu der Brennkammer (52) zuführt, wenn die Ausgabe des Sauerstoffsensors (70) kalibriert wird.

4. Sauerstoffsensorsteuergerät nach einem der Ansprüche 1 bis 3, wobei
die Kalibriereinheit (10) eine durch den Sauerstoffsensor (70) erfasste Konzentration von Sauerstoff in Luft und eine Temperatur des Sauerstoffsensors (70) beschafft, und
die Temperatursteuereinheit (10) die erste vorbestimmte Temperatur auf eine Minimaltemperatur einstellt, bei oder über welcher der Sauerstoffsensor (70) in der Lage ist, die Konzentration von Sauerstoff in Luft zu erfassen, basierend auf dem Verhältnis zwischen der Konzentration von Sauerstoff in Luft und der Temperatur des Sauerstoffsensors (70), die durch die Kalibriereinheit (10) beschafft sind.

5. Sauerstoffsensorsteuergerät nach Anspruch 4, wobei
die Temperatursteuereinheit (10) die Kalibrierzieltemperatur auf die erste vorbestimmte Temperatur einstellt.

6. Sauerstoffsensorsteuergerät nach Anspruch 5, wobei
die Temperatursteuereinheit (10) die Zieltemperatur während einer Energieerzeugung der Brennstoffzelle (60) basierend auf der aktualisierten Kalibrierzieltemperatur korrigiert.

7. Sauerstoffsensorsteuergerät nach Anspruch 5 oder 6, ferner mit:
einer Alarmeinheit (90), die einen Benutzer alarmiert, wenn die durch die Temperatursteuereinheit (10) aktualisierte Kalibrierzieltemperatur höher als oder gleich wie eine zweite vorbestimmte Temperatur ist, die höher als die erste vorbestimmte Temperatur ist.

8. Sauerstoffsensorsteuergerät nach einem der Ansprüche 1 bis 3, ferner mit:
einer Aufwärmbestimmungseinheit (10), die bestimmt, ob eine Aufwärmung des Sauerstoffsensors (70) abgeschlossen ist, wobei
die erste vorbestimmte Temperatur eine Aufwärmabschlusstemperatur ist, bei der die Aufwärmbestimmungseinheit (10) bestimmt, dass eine Aufwärmung des Sauerstoffsensors (70) abgeschlossen ist.

9. Sauerstoffsensorsteuergerät nach Anspruch 8, wobei
die Aufwärmbestimmungseinheit (10) bestimmt, dass eine Aufwärmung des Sauerstoffsensors (70) abgeschlossen ist, wenn eine Erhöhung oder eine Verringerung einer Ausgabe des Sauerstoffsensors (70) innerhalb eines vorbestimmten Bereichs konvergiert.

10. Sauerstoffsensorsteuergerät nach einem der Ansprüche 1 bis 9, wobei
die Kalibriereinheit (10) die Ausgabe des Sauerstoffsensors (70) kalibriert, wenn die Brennkammer (52) zu dem Zeitpunkt eines Einschaltens der Brennstoffzelle (60) gereinigt wird.

11. Sauerstoffsensorsteuergerät nach einem der Ansprüche 1 bis 9, wobei
die Kalibriereinheit (10) die Ausgabe des Sauerstoffsensors (70) kalibriert, wenn die Brennstoffkammer (52) zu dem Zeitpunkt eines Anhaltens eines Betriebs der Brennstoffzelle (60) gereinigt wird.

12. Sauerstoffsensorsteuergerät nach einem der Ansprüche 1 bis 9, wobei
die Kalibriereinheit (10) die Ausgabe des Sauerstoffsensors (70) kalibriert, wenn eine Last an der Brennstoffzelle (60) kleiner als oder gleich wie ein vorbestimmter Wert ist.

13. Sauerstoffsensorsteuergerät nach einem der Ansprüche 1 bis 9, wobei
die Kalibriereinheit (10) einen Betrieb der Brennstoffzelle anhält und die Ausgabe des Sauerstoffsensors (70) kalibriert, wenn eine vorbestimmte Zeitpanne seit einer vorhergehenden Kalibrierung der Ausgabe des Sauerstoffsensors (70) vergangen ist.

14. Sauerstoffsensorsteuerverfahren, mit
einem Angleichen einer Temperatur eines Sauerstoffsensors (70), der eine Konzentration von Sauerstoff in Abgas von einer Brennkammer (52) erfasst, in der Anodenabgas einer Brennstoffzelle (60) verbrannt wird, an eine Zieltemperatur; und
einem Kalibrieren einer Ausgabe des Sauerstoffsensors (70), wobei
wenn die Temperatur des Sauerstoffsensors (70) an eine Zieltemperatur angeglichen wird, eine Vielzahl der Zieltemperaturen eingestellt wird, eine Kalibrierzieltemperatur, die höher als oder gleich wie eine erste vorbestimmte Temperatur ist, unter der Vielzahl von Zieltemperaturen ausgewählt wird, wenn die Ausgabe des Sauerstoffsensors (70) kalibriert wird, und eine Zieltemperatur, die niedriger als die Kalibrierzieltemperatur ist, unter der Vielzahl von Zieltemperaturen während einer Energieerzeugung der Brennstoffzelle (60) ausgewählt wird.

15. Sauerstoffsensorsteuerverfahren nach Anspruch 14, wobei
die Ausgabe des Sauerstoffsensors (70) basierend auf einer Ausgabe des Luft ausgesetzten Sauerstoffsensors (70) kalibriert wird.

16. Sauerstoffsensorsteuerverfahren nach einem der Ansprüche 14 oder 15, mit
einem Beschaffen einer durch den Sauerstoffsensor (70) erfassten Konzentration von Sauerstoff in Luft und einer Temperatur des Sauerstoffsensors (70), und
einem Einstellen der ersten vorbestimmten Temperatur auf eine Minimaltemperatur, bei oder über welcher der Sauerstoffsensor (70) in der Lage ist, die Konzentration von Sauerstoff in Luft zu erfassen, basierend auf dem Verhältnis zwischen der beschafften Konzentration von Sauerstoff in Luft und der beschafften Temperatur des Sauerstoffsensors (70).

17. Sauerstoffsensorsteuerverfahren nach Anspruch 16, ferner mit:
einem Einstellen der Kalibrierzieltemperatur auf die erste vorbestimmte Temperatur.

18. Sauerstoffsensorsteuerverfahren nach Anspruch 17, ferner mit:
einem Korrigieren der Zieltemperatur während einer Energieerzeugung der Brennstoffzelle (60) basierend auf der aktualisierten Kalibrierzieltemperatur korrigiert.

19. Sauerstoffsensorsteuerverfahren nach Anspruch 17 oder 18, ferner mit:
einem Alarmieren eines Benutzers, wenn die aktualisierte Kalibrierzieltemperatur höher als oder gleich wie eine zweite vorbestimmte Temperatur ist, die höher als die erste vorbestimmte Temperatur ist.

20. Sauerstoffsensorsteuerverfahren nach einem der Ansprüche 14 bis 19, wobei
die Ausgabe des Sauerstoffsensors (70) kalibriert wird, wenn die Brennkammer (52) zu dem Zeitpunkt eines Einschaltens der Brennstoffzelle (60) gereinigt wird.

21. Sauerstoffsensorsteuerverfahren nach einem der Ansprüche 14 bis 19, wobei
die Ausgabe des Sauerstoffsensors (70) kalibriert wird, wenn die Brennstoffkammer (52) zu dem Zeitpunkt eines Anhaltens eines Betriebs der Brennstoffzelle (60) gereinigt wird.

22. Sauerstoffsensorsteuerverfahren nach einem der Ansprüche 14 bis 19, wobei
die Ausgabe des Sauerstoffsensors (70) kalibriert wird, wenn eine Last an der Brennstoffzelle (60) kleiner als oder gleich wie ein vorbestimmter Wert ist.

23. Sauerstoffsensorsteuerverfahren nach einem der Ansprüche 14 bis 19, wobei
ein Betrieb der Brennstoffzelle (60) angehalten wird und die Ausgabe des Sauerstoffsensors (70) kalibriert wird, wenn eine vorbestimmte Zeitpanne seit einer vorhergehenden Kalibrierung der Ausgabe des Sauerstoffsensors (70) vergangen ist.

## Revendications

1. Commande de capteur d'oxygène comportant :
un capteur (70) d'oxygène servant à détecter une concentration d'oxygène dans un gaz d'échappement provenant d'une chambre (52) de combustion dans laquelle un effluent gazeux d'anode d'une pile (60) à combustible est brûlé ;
une unité (10) de régulation de température servant à régler une température du capteur (70) d'oxygène à une température visée ; et **caractérisée par**
une unité (10) d'étalonnage servant à étalonner une sortie du capteur (70) d'oxygène,
l'unité (10) de régulation de température possédant une pluralité de températures visées, étant conçue pour sélectionner une température visée d'étalonnage, qui est supérieure ou égale à une première température prédéterminée, parmi la pluralité de températures visées lorsque l'unité (10) d'étalonnage étalonne la sortie du capteur (70) d'oxygène, et étant conçue pour sélectionner une température visée, qui est inférieure à la température visée d'étalonnage, parmi la pluralité de températures visées pendant la production d'électricité de la pile à combustible.

2. Commande de capteur d'oxygène selon la revendication 1,
l'unité (10) d'étalonnage étalonnant la sortie du capteur (70) d'oxygène sur la base d'une sortie du capteur (70) d'oxygène exposé à l'air.

3. Commande de capteur d'oxygène selon la revendication 1, comportant en outre :
une unité (40) d'alimentation en air qui fournit de l'air à la chambre (52) de combustion ; et
une unité (10) de commande de balayage qui exécute une commande telle que l'unité (40) d'alimentation en air fournit de l'air à la chambre (52) de combustion lorsque la sortie du capteur (70) d'oxygène est étalonnée.

4. Commande de capteur d'oxygène selon l'une quelconque des revendications 1 à 3,
l'unité (10) d'étalonnage acquérant une concentration d'oxygène dans l'air, détectée par le capteur (70) d'oxygène, et une température du capteur (70) d'oxygène, et
l'unité (10) de régulation de température réglant la première température prédéterminée à une température minimale, à laquelle ou au-dessus de laquelle le capteur (70) d'oxygène est capable de détecter la concentration d'oxygène dans l'air, sur la base de la relation entre la concentration d'oxygène dans l'air et la température du capteur (70) d'oxygène qui sont acquises par l'unité (10) d'étalonnage.

5. Commande de capteur d'oxygène selon la revendication 4,
l'unité (10) de régulation de température réglant la température visée d'étalonnage à la première température prédéterminée.

6. Commande de capteur d'oxygène selon la revendication 5,
l'unité (10) de régulation de température corrigeant la température visée pendant la production d'électricité de la pile (60) à combustible sur la base de la température visée d'étalonnage actualisée.

7. Commande de capteur d'oxygène selon la revendication 5 ou 6, comportant en outre :
une unité (90) d'alarme qui alerte un utilisateur lorsque la température visée d'étalonnage actualisée par l'unité (10) de régulation de température est supérieure ou égale à une deuxième température prédéterminée qui est supérieure à la première température prédéterminée.

8. Commande de capteur d'oxygène selon l'une quelconque des revendications 1 à 3, comportant en outre :
une unité (10) de détermination d'échauffement qui détermine si un échauffement du capteur (70) d'oxygène est achevé,
la première température prédéterminée étant une température d'achèvement d'échauffement à laquelle l'unité (10) de détermination d'échauffement détermine que l'échauffement du capteur (70) d'oxygène est achevé.

9. Commande de capteur d'oxygène selon la revendication 8,
l'unité (10) de détermination d'échauffement déterminant que l'échauffement du capteur (70) d'oxygène est achevé lorsqu'une augmentation ou une diminution de la sortie du capteur (70) d'oxygène converge dans les limites d'une plage prédéterminée.

10. Commande de capteur d'oxygène selon l'une quelconque des revendications 1 à 9,
l'unité (10) d'étalonnage étalonnant la sortie du capteur (70) d'oxygène lorsque la chambre (52) de combustion est balayée au moment du démarrage de la pile (60) à combustible.

11. Commande de capteur d'oxygène selon l'une quelconque des revendications 1 à 9,
l'unité (10) d'étalonnage étalonnant la sortie du capteur (70) d'oxygène lorsque la chambre (52) de combustion est balayée au moment de l'arrêt du fonctionnement de la pile (60) à combustible.

12. Commande de capteur d'oxygène selon l'une quelconque des revendications 1 à 9,
l'unité (10) d'étalonnage étalonnant la sortie du capteur (70) d'oxygène lorsqu'une charge sur la pile (60) à combustible est inférieure ou égale à une valeur prédéterminée.

13. Commande de capteur d'oxygène selon l'une quelconque des revendications 1 à 9,
l'unité (10) d'étalonnage arrêtant le fonctionnement de la pile à combustible et étalonnant la sortie du capteur (70) d'oxygène lorsqu'une durée prédéterminée s'est écoulée depuis un étalonnage précédent de la sortie du capteur (70) d'oxygène.

14. Procédé de commande de capteur d'oxygène **caractérisé en ce qu'**il comporte les étapes consistant à :
régler une température d'un capteur (70) d'oxygène, qui détecte une concentration d'oxygène d'un gaz d'échappement provenant d'une chambre (52) de combustion dans laquelle un effluent gazeux d'anode d'une pile (60) à combustible est brûlé, à une température visée ; et
étalonner une sortie du capteur (70) d'oxygène,
**caractérisé en ce que**
lorsque la température du capteur (70) d'oxygène est réglée à une température visée, une pluralité de températures visées est réglée, une température visée d'étalonnage supérieure ou égale à une première température prédéterminée est sélectionnée parmi la pluralité de températures visées lorsque la sortie du capteur (70) d'oxygène est étalonnée, et une température visée, qui est inférieure à la température visée d'étalonnage, est sélectionnée parmi la pluralité de températures visées pendant la production d'électricité de la pile (60) à combustible.

15. Procédé de commande de capteur d'oxygène selon la revendication 14,
la sortie du capteur (70) d'oxygène étant étalonnée sur la base d'une sortie du capteur (70) d'oxygène exposé à l'air.

16. Procédé de commande de capteur d'oxygène selon la revendication 14 ou 15, comportant en outre les étapes consistant à :
acquérir une concentration d'oxygène dans l'air, détectée par le capteur (70) d'oxygène, et une température du capteur (70) d'oxygène ; et
régler la première température prédéterminée à une température minimale, à laquelle ou au-dessus de laquelle le capteur (70) d'oxygène est capable de détecter la concentration d'oxygène dans l'air, sur la base de la relation entre la concentration acquise d'oxygène dans l'air et la température acquise du capteur (70) d'oxygène.

17. Procédé de commande de capteur d'oxygène selon la revendication 16, comportant en outre les étapes consistant à :
régler la température visée d'étalonnage à la première température prédéterminée.

18. Procédé de commande de capteur d'oxygène selon la revendication 17, comportant en outre les étapes consistant à :
corriger la température visée pendant la production d'électricité de la pile (60) à combustible sur la base de la température visée d'étalonnage actualisée.

19. Procédé de commande de capteur d'oxygène selon la revendication 17 ou 18, comportant en outre les étapes consistant à :
alerter un utilisateur lorsque la température visée d'étalonnage actualisée est supérieure ou égale à une deuxième température prédéterminée qui est supérieure à la première température prédéterminée.

20. Procédé de commande de capteur d'oxygène selon l'une quelconque des revendications 14 à 19,
la sortie du capteur (70) d'oxygène étant étalonnée lorsque la chambre (52) de combustion est balayée au moment du démarrage de la pile (60) à combustible.

21. Procédé de commande de capteur d'oxygène selon l'une quelconque des revendications 14 à 19,
la sortie du capteur (70) d'oxygène étant étalonnée lorsque la chambre (52) de combustion est balayée au moment de l'arrêt du fonctionnement de la pile (60) à combustible.

22. Procédé de commande de capteur d'oxygène selon l'une quelconque des revendications 14 à 19,
la sortie du capteur (70) d'oxygène étant étalonnée lorsqu'une charge sur la pile (60) à combustible est inférieure ou égale à une valeur prédéterminée.

23. Procédé de commande de capteur d'oxygène selon l'une quelconque des revendications 14 à 19,
le fonctionnement de la pile (60) à combustible étant stoppé et la sortie du capteur (70) d'oxygène étant étalonnée lorsqu'une durée prédéterminée s'est écoulée depuis un étalonnage précédent de la sortie du capteur (70) d'oxygène.
